# EUROPÄISCHE PATENTSCHRIFT

(11) **EP 3 227 244 B1**
(45) Veröffentlichungstag und Bekanntmachung des Hinweises auf die Patenterteilung: **08.12.2021**
(21) Anmeldenummer: 15817057.1
(22) Anmeldetag: 21.10.2015
(51) Int. Cl.: B32B 17/00, B32B 17/10, F21V 8/00, C03C 17/00, C03C 23/00

(54) **GLASPLATTE**
GLASS PLATE
PLAQUE DE VERRE

(30) Priorität: 21.10.2014 DE 102014015695
(43) Veröffentlichungstag der Anmeldung: 11.10.2017
(73) Patentinhaber: Isophon Glas GmbH, 34346 Hann. Münden (DE)
(72) Erfinder: BOLD, Torsten, 34346 Hann. Münden (DE); WILKOP, Leonard, Johannes, David, 34121 Kassel (DE)
(74) Vertreter: Schwarz, Diethelm
(86) Internationale Anmeldenummer: PCT/DE2015/000519
(87) Internationale Veröffentlichungsnummer: WO 2016/062299

(56) Entgegenhaltungen:
- EP-A1- 2 409 833
- EP-A1- 2 492 979
- EP-A2- 0 782 017
- EP-A2- 2 645 433
- EP-B1- 2 619 003
- WO-A2-2008/132368
- US-A1- 2004 232 826
- US-A1- 2009 213 618
- US-A1- 2010 027 293
- US-A1- 2013 170 192
- US-B2- 8 419 251
- DATABASE WPI Week 201471 14. August 2013 (2013-08-14) Thomson Scientific, London, GB; AN 2014-T89550 XP002759383, -& CN 103 978 750 A (FUYAO GLASS IND GROUP CO LTD) 13. August 2014 (2014-08-13)

## Beschreibung

Die Erfindung betrifft eine Glasplatte gemäß dem Oberbegriff des Anspruchs 1.

Bei einer Beleuchtung von Glasplatten sind unterschiedliche Wege beschritten worden. So wird zum Erreichen einer farbigen Beleuchtung von insbesondere für Werbezwecke eingesetzten Glasscheiben eine Einfärbung durch Zugabe von Zusatzstoffen wie Metalloxiden wie etwa der 3d-Elemente des Periodensystems bei der Glasherstellung gewählt. Entsprechend eingefärbte Glasbereiche, die etwa in Form von Schriftzügen oder Symbolen von üblichen Fassadenbestandteilen getrennt sind, werden durch Hintergrundbeleuchtung mit Weißlichtlampen angestrahlt und leuchten entsprechend der durch die Glaszusammensetzung hervorgerufenen Einfärbung. Dadurch, dass die zum farbigen Leuchten eingesetzten Glasplatten bei ihrer Herstellung eingefärbt wurden, ist eine Veränderung der Farbausstrahlung allerdings nachträglich nicht mehr möglich.

Daher werden auch eingefärbte Folien eingesetzt, die im Falle eines Einsatzes zu Reklamezwecken in Form von Buchstabenfolgen geschnitten und an Fassaden aufgebracht werden, um entsprechend leuchtende Schriftzüge hervorzurufen. Dabei versteht sich wiederum eine Beleuchtung der mit den farbigen Folien versehenen Bereiche der Gläser bzw. Glasplatten mit herkömmlichen weißen oder farbigen Lichtquellen. Der Nachteil bei dieser Art der Erzeugung von leuchtenden Glasflächen liegt in der bei Tageslicht im Bereich der Folien eingeschränkten Transmission. Eine weitere ebenfalls mit einer für weißes Licht eingeschränkten Transmission verbundene Beleuchtungsart stellen auf Fenster- bzw. Tür- oder sonstigen Fassadengläsern angebrachte Gravuren dar, die im Falle einer auch seitlichen Beleuchtung aufgrund der Störung der inneren Struktur der Gläser zu einer Lichtauskoppelung führen und so den gravierten Glasbereich entsprechend der Gravurflächenform zum Leuchten bringen können.

So ist aus der DE 10 2009 006 856 A1 zur Bereitstellung von Leuchtfeldern, die bei einer eingeschalteten Lichtquelle leuchten und im Falle des Nichtvorhandenseins oder der ausgeschalteten Lichtquelle optisch transparent sind, ein Vorsehen eines Leuchtfeldes auf einer Grundscheibe bekannt. Dabei enthält das Leuchtfeld eine Trägermatrix aus einem Polymer und Leuchtpartikel im Größenbereich von einigen Nanometern bis einigen Mikrometern. Die Grundscheibe ist am Rand mit einer Lichtquelle wie etwa einer lichtemittierenden Diode (LED) versehen. Als Leuchtpartikel können dabei Übergangsmetallverbindungen wie BaTiO₃, PbS, CdSe, CdS oder Gemische davon dienen. Die seitlich in die Grundscheibe eingestrahlten Lichtstrahlen der LED werden an dem Leuchtfeld gestreut und erzeugen so ein helles Aufleuchten des mit entsprechenden Partikeln wie lumineszierenden Partikeln versehenen Leuchtfeldes. Auf diese Art kann ein bestimmter vorgebbarer Bereich oder eine bestimmte vorgebbare Form einer Scheibe zum Leuchten gebracht werden.

Um die mit der Einfärbung von Glas bzw. der Verwendung gefärbter Folien verbundenen Nachteile auszugleichen, ist auch vorgeschlagen worden, durch Kanteneinstrahlung von Licht und dessen seitlicher Auskoppelung über Streuzentren weiß leuchtende flächige Glaselemente zu erzeugen.

Begrenzend für die erreichbare Ausdehnung einer im Wesentlichen weiß leuchtenden Glasscheibe ist durch Verluste aufgrund von Absorption und Auskoppelung des Lichtes gegeben. Darüber hinaus ist aufgrund der Eisenoxidbestandteile des Glases und deren Absorptionsverhalten eine Grünfärbung des ausgestrahlten Lichtes zu beobachten.

Zu Bereitstellung einer Lichtleiterplatte mit einer verbesserten Auskopplung von Licht schlägt die Gebrauchsmusterschrift DE 20 2010 001 155 U1 eine Lichtleiterplatte vor, die eine erste Flachseite, eine zu der ersten Flachseite parallele zweite Flachseite und eine Stirnseite aufweist. Die Stirnseite ist dabei zur Einkoppelung von Licht und die zweite Flachseite zur Auskopplung des über die Stirnseite eingekoppelten Lichts vorgesehen. An der ersten Flachseite sind Vertiefungen vorgesehen, in denen zur Auskopplung des Lichts dienende und Phosphor aufweisende Strukturelemente angeordnet sind. Auf diese Weise lässt sich das diffuse Streuverhalten der Strukturelemente positiv beeinflussen bzw. verstärken. Durch die Wechselwirkung des Lichts mit Phosphor lässt sich blaues Licht in weißes Licht umwandeln.

Daneben ist in der DE 10 2007 046 650 A1 vorgeschlagen worden, in eine Glasanordnung einen photolumineszierenden Leuchtstoff einzubringen, um ein von einem Betrieb von Stromquellen unabhängiges Leuchten sicherzustellen bzw. ein durch eine Beleuchtung mit Lichtquellen erzeugtes Nachleuchten nach dem Ausschalten der Lichtquellen bereitzustellen. Die DE 10 2007 046 656 A1 schlägt dazu eine Glasanordnung mit einem ersten Glaselement, dessen Oberfläche mit reflektierenden und/oder streuenden Eigenschaften für darauf fallendes Licht aufweist, und mit einem zweiten parallel zu dem ersten angeordneten Glaselement derart vor, dass entlang der Oberfläche mit den reflektierenden und streuenden Eigenschaften zwischen den beiden Glaselementen ein Gießharz mit Leuchtstoff-Partikeln vorgesehen ist.

Als nachleuchtende Partikel sind Erdalkalialuminate oder Strontiumaluminate vorgeschlagen worden. Diese können in das Gießharz eingemischt und mit diesem auf die reflektierende und/oder streuende Oberfläche des ersten Glaselementes flächig aufgebracht werden. Ebenso ist bei einer Herstellung eines Verbundglases auch die Möglichkeit dargelegt, die nachleuchtenden Partikel auf die Oberfläche des ersten Glaselementes aufzubringen und diese zwischen erstem und zweitem Glaselement bei einer Temperatur oberhalb der Transformationstemperatur der Glassubstrate einzuschmelzen. Schließlich ist alternativ auch eine Verwendung einer Folie als Trägermaterial für die phosporeszierenden Partikel denkbar. Ist die Folie als Polyvinylbutyral-Folie (PVB) ausgeführt, so können die nachleuchtenden Partikel vor einem Ziehen in die Folie in deren Schmelze eingebracht werden und die Folie zwischen dem ersten und zweiten Glaselement in üblicher Weise laminiert werden. Die in der DE 10 2007 046 650 A1 vorgeschlagene Glasanordnung kann aber nur als Verbundglas realisiert werden.

Weiter beschreibt die US 2010/0213618 A1 eine Beleuchtungsvorrichtung mit einer Licht emittierenden Komponente, einer Lichtführungsplatte und einem fluoreszierenden Material. Die lichtemittierende Komponente ist dabei als eine an einer lateralen Seite der Lichtführungsplatte angeordnete LED ausgeführt, um als primäre Lichtquelle zu dienen. Die Platte besteht aus einem transparenten Material und umfasst eine Lichteinfallsfläche, eine Lichtausgangsfläche und eine Bodenfläche gegenüber der Lichtausgangsfläche. Die einfallende Lichtfläche zeigt zur LED, die lichtreflektierende Schicht ist gleichmäßig auf der Bodenfläche angeordnet, um das von der LED emittierte Licht zur Lichtausgangsfläche zu reflektieren. Die Platte weist prismenförmige Aussparungen an der Lichtausgangsfläche auf, die mit fluoreszierendem Material gefüllt sind.

Schließlich offenbart die US 2010/0027293 A1 eine lichtemittierende Platte, die ein lichtleitendes Medium umfasst, in dem Licht in ein oder mehrere Kanten des Mediums eingekoppelt wird, sodass es durch Totalreflexion über das gesamte Volumen des Mediums geführt wird. Das Lichtleitmedium weist mindestens eine Lichtemissionsfläche und ein Muster von optischen Merkmalen oder Diskontinuitäten auf, die auf der Lichtemissionsfläche und/oder der gegenüberliegenden Seite des Mediums vorgesehen sind, um die Emission von Licht von der Lichtemissionsfläche zu fördern. Das Muster von Merkmalen ist konfiguriert, um eine Änderung der Intensität des emittierten Lichts über im Wesentlichen die gesamte Oberfläche der lichtemittierenden Fläche von kleiner oder gleich ungefähr 25% zu erreichen.

Der Erfindung stellt sich daher die Aufgabe, eine homogene Ausstrahlung von im Wesentlichen weißem Licht über eine Fläche bei einer Glasplatte unabhängig von deren Herstellung bereitzustellen.

Die Aufgabe wird in Verbindung mit den im Oberbegriff des Anspruchs 1 angegebenen Merkmalen mit den kennzeichnenden Merkmalen desselben Anspruchs gelöst.

Demgemäß sieht die Erfindung eine Glasplatte, insbesondere Einscheibensicherheitsglas vor, deren einer Randabschnitt zum Ansetzen wenigstens einer Licht in einem ersten Wellenlängenbereich (λ₁ +/- Δ λ₁) emittierenden Lichtquelle derart geeignet ist, dass das von ihr ausgestrahlte Licht in das Innere der Glasplatte im Wesentlichen in Richtung auf einen dem einen Randabschnitt gegenüberliegenden Randabschnitt der Glasplatte eingestrahlt wird, und mit einem entlang der Einstrahlungsrichtung der Lichtquelle vorgesehenen Wellenlängenkonversionsleuchtstoff, der eingestrahltes Licht des ersten Wellenlängenbereichs (λ₁ +/- Δ λ₁) zumindest teilweise in Licht eines zweiten Wellenlängenbereichs (λ₂ +/- Δ λ₂) umwandelt und ausstrahlt, wobei der Wellenlängenkonversionsleuchtstoff im Bereich einer entlang der Einstrahlungsrichtung angebrachten Oberflächengravur vorgesehen ist. Die Glasplatte zeichnet sich dadurch aus, dass der Wellenlängenkonversionsleuchtstoff im Bereich der Oberflächengravur mit pulverisiertem Glas in die Glasplatte eingebrannt ist.

Mit Vorteil kann erfindungsgemäß eine nach einer bzw. bei einer Bestrahlung von Licht eines ersten Wellenlängenbereichs homogen über eine Fläche leuchtende, d.h. im Wesentlichen weißes Licht ausstrahlende Glasplatte ohne Einschränkungen wie beispielsweise Transmissionsverluste im unbeleuchteten Zustand erreicht werden. Ferner ermöglicht die Erfindung eine große Variabilität bei der Ausstrahlung von farbigem Licht aus Glasplatten.

Der Wellenlängenkonversionsleuchtstoff ist im Bereich einer Oberflächengravur, die entlang einer von den Randabschnitten begrenzten Außenseite der Glasplatte angebracht ist, vorgesehen.

In einer Ausführungsform der erfindungsgemäßen Glasplatte geschieht ein Aufbringen des Wellenlängenkonversionsleuchtstoffs und eines Glaspulvers durch ein Digital- oder Siebdruckverfahren. Dazu müssen der Wellenlängenkonversionsleuchtstoff und das Glaspulver mit entsprechenden Schmelzlacken oder Lösemitteln gemischt werden.

Bei einer anderen Ausführungsformist denkbar eine Mischung aus dem Wellenlängenkonversionsleuchtstoff und pulverisiertem Glas im Bereich der Oberflächengravur der Glasplatte einzubrennen. Es ist aber auch vom Rahmen der Erfindung umfasst, die Oberflächengravur zunächst mit dem Wellenlängenkonversionsleuchtstoff und dann mit pulverisiertem Glas zu belegen und beides dann anschließend einzubrennen.

Die Oberflächengravur wird bevorzugt durch eine Bestrahlung des Glases mit einem Laser hergestellt. Dazu ist ein Infrarotlaser besonders geeignet. Wird die Oberflächengravur durch eine Laserbestrahlung der Glasplatte erzeugt, so werden die erfindungsgemäßen Strukturelemente der Oberflächengravur aus trichter- oder kesselförmigen, kraterartigen Ausnehmungen gebildet. Es versteht sich, dass die Oberflächengravur auch anders als durch eine Laserbestrahlung erzeugt werden kann. Dabei ist im Rahmen der Erfindung eine Sandstrahlbehandlung oder dergleichen von Glasplatten denkbar.

Die Oberflächengravur weist vorzugsweise Strukturelemente auf, deren Abstand voneinander mit zunehmender Entfernung von der Anbringungsposition der Lichtquellen abnimmt. So kann mit Vorteil bei einem Lokalisieren von Wellenlängenkonversionsleuchtstoff etwa durch Belegung der Strukturelemente damit und anschließendes Einbrennen eine homogene leuchtende Glasplatte erhalten werden. Der Abnahme der Intensität des den Wellenlängenkonversionsleuchtstoff anregenden Lichtes durch Absorption im Glas und durch Licht-Auskoppelung kann so für einen Betrachter kompensiert werden.

Die Gravurelemente können u.a. als Streifen oder beispielsweise auch kreisförmig ausgeführt sein. Jede andere geometrische, wiederholbare Form kann auch zur Erzeugung der Strukturelemente benutzt werden.

Eine erfindungsgemäße Glasplatte kann als Konversionsleuchtstoff-Material Cer dotiertes Yttrium-Aluminium-Granat, Lutetium-Aluminium-Granat und/oder Europium dotiertes Strontium-Barium-Nitritsilikat enthalten.

Der im Rahmen der Erfindung eingesetzte Wellenlängenkonversionsleuchtstoff umfasst Materialien mit Granatstruktur, die gemäß der folgenden Formel A₃B₅O₁₂:D, wobei A ein Seltenes Erdmetall, B Aluminium oder Gallium und D einen wahlweise ein Seltenes Erdmetall zumindest teilweise ersetzenden Aktivator bezeichnet.

Erfindungsgemäß kann eine einen Wellenlängenkonversionsleuchtstoff enthaltende Polymerfolie, insbesondere Polyvinylbutyralfolie auch auf eine erfindungsgemäße Glasplatte an der mit einer Oberflächengravur versehenen Außenseite aufgebracht, insbesondere laminiert sein. Der in der Polymerfolie vorhandene Wellenlängenkonversionsleuchtstoff kann bei einer entsprechenden Beleuchtung der Glasplatte die von dem Wellenlängenkonversionsleuchtstoff im Bereich der Oberflächengravur, insbesondere im Bereich der Ausnehmungen erzeugte Emission von weißem Licht vergleichmäßigen.

Erfindungsgemäß wird in die bevorzugt als Polyvinylbutyral (PVB) ausgeführte Polymerfolie ein Wellenlängenkonversionsleuchtstoff eingebracht. Dazu wird das als Pulvergranulat vorliegende Polymermaterial mit einem Verdünnungsmittel in Lösung gebracht und der Wellenlängenkonversionsleuchtstoff, der ebenfalls bevorzugt in Pulverform vorliegen kann, hinzugefügt. Die Polymerfolie wird dann in an sich bekannter Weise in einem Extrusionsverfahren hergestellt.

Es versteht sich, dass die Erfindung auch einen Bausatz aus einer Glasplatte gemäß Anspruch 1 und die an den Randabschnitt davon anzusetzenden Lichtquellen gemäß Anspruch 1 umfasst.

Im Folgenden wird die Erfindung anhand von Ausführungsbeispielen näher erläutert, wobei auf die in unterschiedlichen Maßstäben gehaltenen und zum Teil schematisch stark vereinfachten Figuren Bezug genommen wird. Es zeigen:
- Fig. 1: eine Aufsicht auf eine erfindungsgemäße Glasplatte,
- Fig. 2: eine Aufsicht durch die erfindungsgemäße Glasplatte nach Fig. 1 in einem beleuchteten und leuchtenden Zustand,
- Fig. 3: einen mit dem Buchstaben K markierten Bereich in vergrößerter Darstellung und
- Fig. 4a -: d eine erfindungsgemäße Glasplatte nach Fig. 1 in verschiedenen Laminierungszuständen mit einer weiteren Glasplatte.

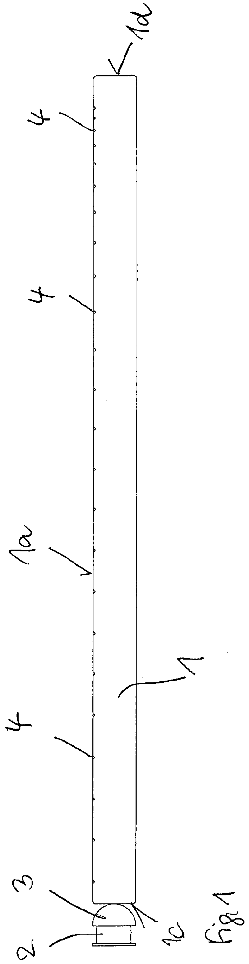

An eine erfindungsgemäße Glasplatte 1 sind wie in Fig. 1 veranschaulicht an einem Randabschnitt 1c als lichtemittierende Dioden (LED) auf Halbleiterbasis ausgeführte Lichtquellen 2 angesetzt. Die von den LEDs 2 ausgestrahlte Strahlung wird mit Hilfe von Linsen 3 stirnseitig in die Glasplatte 1 gesandt. An einer Außenseite 1a der quaderförmig ausgeführten Glasplatte 1 sind Gravurelemente 4 eingebracht, deren Abstand zu dem mit den LEDs 2 versehenen Randabschnitt 1c gegenüberliegenden Randabschnitt 1d wie in Fig. 1 veranschaulicht geringer ist. Die Gravurelemente 4 werden erfindungsgemäß durch eine Bestrahlung der Glasplatte 1 mit einem Laserstrahl hoher Intensität, etwa einem Strahl eines Infrarot-Lasers erzeugt.

Dabei wird durch einen fokussierten Laserstrahl Glasmaterial an der Position des fokussierten Strahls unter Bildung von trichter- bzw. kesselförmigen, kraterartigen Ausnehmungen aufgeschmolzen.

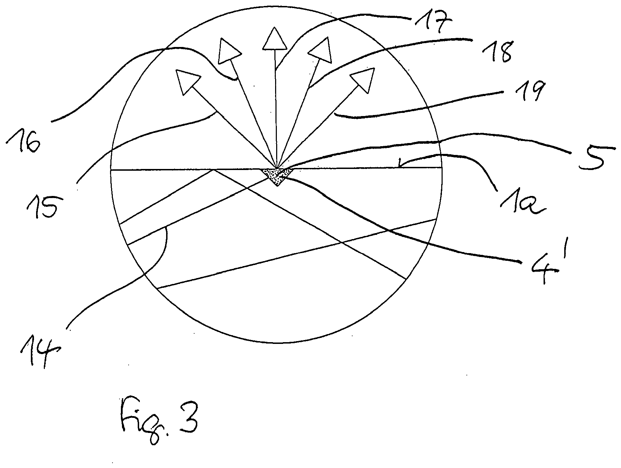

Um eine bei einer Bestrahlung mit einer Lichtquelle über eine Fläche homogen leuchtende Glasplatte bzw. Glasanordnung bereitzustellen, werden die in Fig. 3 vergrößert dargestellten trichterförmigen Ausnehmungen 4 mit einem Gemisch aus einem Wellenlängenkonversionsleuchtstoff wie Yttrium-Aluminium-Granat: YAG: Ce und einem Glaspulver wahlweise unter Hinzunahme eines Einbrennlacks als Träger- bzw. Lösungsmittel beim zur Erzeugung von Einscheibensicherheitsglas (ESG) erforderlichen Erwärmen auf eine Temperatur oberhalb der Transformationstemperatur eingebrannt und zur Erzeugung einer Vorspannung in der Glasplatte 1 abgeschreckt. Vorzugsweise wird dem bei Bezugszeichen 5 veranschaulichten Gemisch ein sogenanntes Diffusorpigment zugesetzt, um die Lichtstreuung in der trichterförmigen Ausnehmung 4 zu erhöhen. Als Diffusorpigmente können im Rahmen der Erfindung Titanoxid (TiO₂), Bariumsulfat oder Titan-II-Oxid eingesetzt werden.

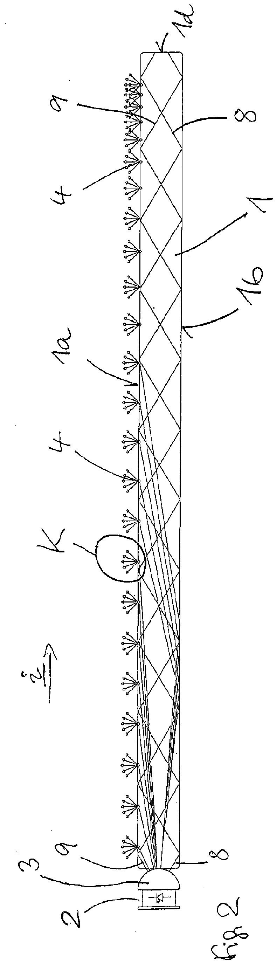

Erfindungsgemäß sind die Linsen 3 wie in Fig. 2 schematisch veranschaulicht am Randabschnitt 1c so vor den entlang des Randabschnitts 1c beabstandet angeordneten Leuchtdioden 2 vorgesehen, dass Randstrahlen 8, 9 des von den Leuchtdioden 2 ausgesandten Lichtes jeweils auf die die Glasplatte 1 nach außen begrenzenden Außenseiten 1a und 1 b an dem Übergang vom optischen Medium Glas zu der Umgebungsluft als dem optisch dünneren Medium unter dem Winkel der Totalreflexion ατ auftreffen und so entsprechend von der jeweiligen Grenzfläche 1a, 1b zur jeweils anderen 1b, 1a reflektiert werden. Die Randstrahlen 8,9 durchlaufen unter jeweils einer Totalreflexion an den beiden gegenüberliegenden Grenzflächen 1a, 1b die Glasplatte, um an dem dem einer Einstrahlung dienenden Randabschnitt 1c gegenüberliegenden Randabschnitt aus der Glasplatte 1 auszutreten.

Alle unter einem größeren Einfallswinkel als durch den Winkel ατ gegebenen Winkel der Totalreflexion eintretenden Lichtstrahlenbündel 12, 13 werden ebenfalls beim Auftreffen auf die Grenzfläche zwischen dem optisch dichteren Medium Glas mit einem Brechungsindex n = 1,5 auf die Umgebungsluft mit einem Brechungsindex von ungefähr n = 1 total reflektiert und durchlaufen ebenso wie die Strahlen 8, 9 die Glasplatte 1 nach mehreren Reflexionen von einem Randabschnitt 1c bis zu ihrem Austritt an dem gegenüberliegenden Randabschnitt 1d.

Ebenso versteht sich, dass bei einer Positionierung der Leuchtdioden 2 bzw. den Linsen 3 derart, dass die von den Leuchtdioden 2 ausgesandten Strahlen die Glasplatte parallel zu den Außenflächen 1a, 1b durchsetzen, das Licht randseitig eintritt und am gegenüberliegenden Rand austritt.

Eine Auskoppelung von Licht aus den Seitenflächen 1a, 1b wird erfindungsgemäß wie anhand der Fig. 3 veranschaulicht dadurch erreicht, dass bei Eintritt eines Lichtstrahls in den Glasbereich 4', der der trichterförmigen Ausnehmung 4 entspricht, einerseits der Winkel für die Totalreflexion ατ nicht mehr wie in den nicht lasergravierten Abschnitten der Glasplatte 1 eingehalten wird, sodass der Lichtstrahl 14 wie anhand der Pfeile 15 bis 19 veranschaulicht an der Außenseite 1a austreten kann. Da in dem der trichterförmigen Ausnehmung 4 entsprechenden Bereich 4' der Glasplatte 1 der Wellenlängenkonversionsstoff vorliegt, wird das eintretende Licht einer Wellenlänge von 445-450 Nanometern, veranschaulicht durch den Lichtstrahl 14 in Fig. 3, innerhalb des Wellenlängenkonversionsstoffs aufgrund von Absorptionsvorgängen in unterschiedliche energetische Zustände und/oder von Anregungsvorgängen unterschiedlicher energetischer Zustände darin in ein Licht im gelben Spektralbereich umgewandelt.

Der Wellenlängenkonversionsstoff wird bei einer Anregung von Licht im blauen Spektralbereich zu einer teilweisen Emission von Licht im gelben Spektralbereich veranlasst. Aus dem Gravurelement 4' wird erfindungsgemäß das von dem Wellenlängenkonversionsstoff von blauem in gelbes Licht umgewandelte Licht gemeinsam mit dem nicht umgewandelten blauen Licht der Leuchtdioden 2 oder mit aufgrund von Streuungen oder ähnlichen Auskoppelungen, insbesondere im Bereich der trichterförmigen Ausnehmungen 4 vorhandenem blauen Licht überlagert. Durch eine Farbaddition des blauen Lichts, das durch die Pfeile 15, 18 symbolisiert wird, und des gelben, durch die Pfeile 16, 17, 19 symbolisierten Lichts erscheint das aus der Glasplatte 1 ausgekoppelte Licht als weiße Strahlung. Diese verlässt die Glasplatte 1 entlang deren Außenseite 1a.

Durch eine Anordnung von Gravurelementen 4 entlang der die Außenseite 1a der Glasplatte 1 aufspannenden Richtungen bei entsprechender Anbringung von mehreren Leuchtdioden 2 entlang des Randabschnitts 1c kann unter Bestrahlung des Wellenlängenkonversionsstoffs mit einer blauen Anregungswellenlänge, der Umwandlung der blauen Wellenlänge in Licht gelber Wellenlänge in dem Wellenlängenkonversionsstoff und entsprechender Ausstrahlung bzw. Auskoppelung aus der Glasplatte 1 durch eine Überlagerung der blauen Primärstrahlung und der ausgesandten Strahlung eine homogen weißes Licht ausstrahlende Glasplatte 1 erhalten werden. Absorptionsverluste des Anregungslichtes der LEDs 2 in der durch den Pfeil i in Fig. 2 gegebenen Richtung und Verluste durch eine Auskoppelung bzw. Umwandlung des Lichtes der LEDs 2 durch die zwischen den Seitenrändern 1c und 1d in Pfeilrichtung (i) angebrachten, mit einem Wellenlängenkonversionsstoff versehenen Gravurelemente 4 können wie folgt kompensiert werden.

Zu dem dem Einstrahlungs-Randabschnitt 1c gegenüberliegenden Randabschnitt der Glasscheibe 1 hin ist die Flächendichte der Gravurelemente 4 erhöht worden, wie in Fig. 2 im Bereich des Randabschnitts veranschaulicht. Dadurch erscheint einem die Glasplatte von der Außenseite 1a her wahrnehmenden Betrachter die Emissionsintensität im an den Randabschnitt angrenzenden Bereich in etwa gleich derjenigen Emissionsintensität wie sie nahe zum Einstrahlungs-Randabschnitt 1c vorliegt. Dabei kompensiert die erhöhte Dichte der mit dem Wellenlängenkonversionsstoff versehenen Gravurelemente 4 die im Bereich zum Einstrahlungs-Randabschnitt 1c reduzierte Lichtemission aus den einzelnen Gravurelementen 4.

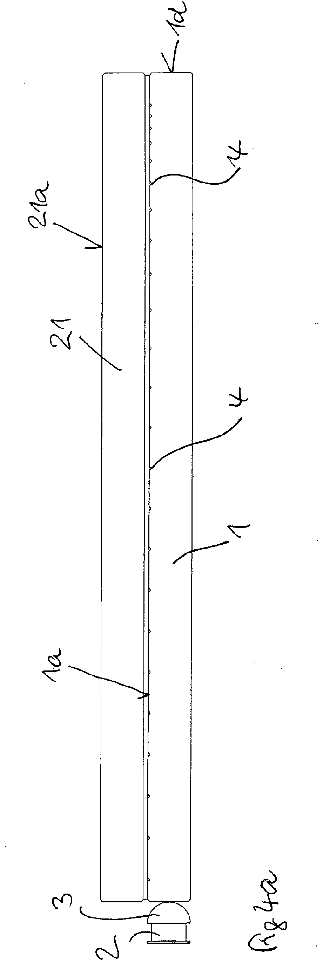

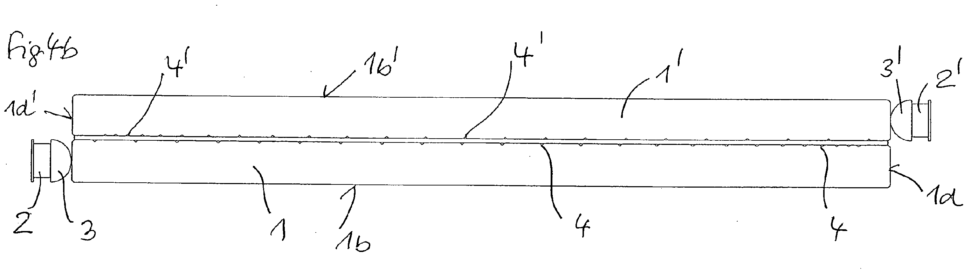

In den Fign. 4a bis 4d sind verschiedene Kombinationen einer erfindungsgemäßen Glasplatte 1 mit weiteren Glasscheiben gezeigt. Nach Fig. 4a ist die Glasplatte 1 an der gemäß der Erfindung weißes Licht ausstrahlenden Außenseite 1a mit einer weiteren Glasplatte 21 verbunden, die vollflächig eingefärbt sein kann, um entlang der Außenfläche 21a eine homogene Ausstrahlung von Licht in der Einfärbungsfarbe der Glasplatte 21 zu ermöglichen. Durch die in Fig. 4b gezeigte Kombination zweier erfindungsgemäßer Glasplatten 1, 1' derart, dass die beiden mit den Gravurelementen 4 versehenen Außenseiten 1a einander gegenüberliegen, kann eine Abstrahlung von weißem Licht über die 180 Grad gegenüberliegenden Außenseiten 1b und 1b' erreicht werden. Ferner kann durch die zu gegenüberliegenden Randabschnitten hin 1d, 1d' erreichte Häufung der Gravurelemente 4 eine homogene Lichtabstrahlung von weißem Licht gewährleistet werden.

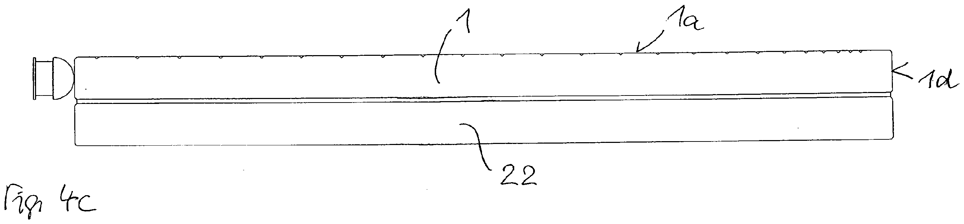

Dadurch, dass wie in Fig. 4c gezeigt, eine noch anders eingefärbte Glasplatte 22 als Substrat für die erfindungsgemäß ausgebildete Glasplatte 1 dient, wird ein Betrachter das weiße, aus der Außenseite 1a der erfindungsgemäßen Glasplatte 1 austretende Licht durch die Einfärbung der Substrat-Glasplatte 22 anders wahrnehmen. Dabei können zusätzliche Effekte dadurch erreicht werden, dass in der Substratplatte 22 unterschiedliche Einfärbungen bzw. flächige Bemalungen oder Beschriftungen vorhanden sein können.

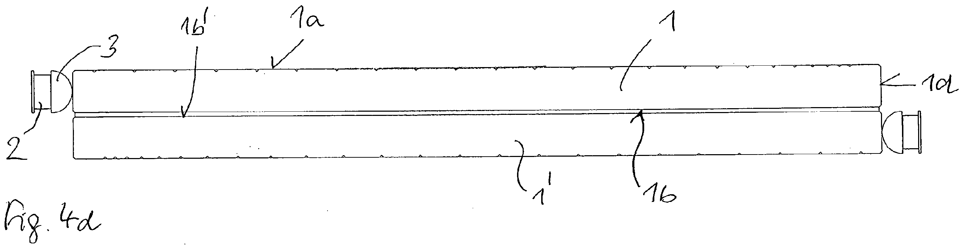

Schließlich können wie in Fig. 4d gezeigt zwei erfindungsgemäße Glasplatten 1, 1' auch entlang ihrer nicht gravierten Außenseiten 1b' miteinander verbunden sein, wobei durch die gegenläufige Anordnung der zum jeweiligen nicht bestrahlten Randabschnitt 1d, 1d' der Glasplatten 1, 1' vorhandenen Häufungen der Gravurelemente 4 eine Vergleichmäßigung der ausgesandten Intensität weißen Lichts erreicht bzw. eine solche unterstützt werden kann.

## Patentansprüche

1. Glasplatte (1), insbesondere Einscheibensicherheitsglas, deren einer Randabschnitt (1c) zum Ansetzen wenigstens einer Licht in einem ersten Wellenlängenbereich (λ₁ +/- Δ λ₁) emittierenden Lichtquelle (2) derart geeignet ist, dass das von ihr ausgestrahlte Licht in das Innere der Glasplatte (1) im Wesentlichen in Richtung auf einen dem einen Randabschnitt (1c) gegenüberliegenden Randabschnitt (1d) der Glasplatte (1) eingestrahlt wird, und mit einem entlang der Einstrahlungsrichtung der Lichtquelle (2) vorgesehenen Wellenlängenkonversionsleuchtstoff, der eingestrahltes Licht des ersten Wellenlängenbereichs (λ₁ +/- Δ λ₁) zumindest teilweise in Licht eines zweiten Wellenlängenbereichs (λ₂ +/- Δ λ₂) umwandelt und ausstrahlt, wobei der Wellenlängenkonversionsleuchtstoff im Bereich einer Oberflächengravur (4), die entlang einer von den Randabschnitten (1c, 1d) begrenzten Außenseite (1a) der Glasplatte (1) angebracht ist, vorgesehen ist, **dadurch gekennzeichnet, dass**
der Wellenlängenkonversionsleuchtstoff im Bereich der Oberflächengravur (4) mit pulverisiertem Glas in die Glasplatte (1) eingebrannt ist.

2. Glasplatte nach Anspruch 1, **dadurch gekennzeichnet, dass** eine Mischung aus dem Wellenlängenkonversionsleuchtstoff, einem Glaspulver und einem Schmelzlack oder einem Lösemittel mit Hilfe eines Digital- oder Siebdruckverfahrens auf die Glasplatte (1) aufgebracht ist.

3. Glasplatte nach Anspruch 1 oder 2, **dadurch gekennzeichnet, dass** die Oberflächengravur (4) durch eine Bestrahlung der Glasplatte (1) mit einem Laser hergestellt ist.

4. Glasplatte nach einem der Ansprüche 1 bis 3, **dadurch gekennzeichnet, dass** die Oberflächengravur Strukturelemente (4) aufweist, deren Abstand voneinander mit zunehmender Entfernung von dem einen Randabschnitt (1c) abnimmt.

5. Glasplatte nach Anspruch 4, **dadurch gekennzeichnet, dass** die Strukturelemente (4) von trichter- oder kesselförmigen Ausnehmungen gebildet werden.

6. Glasplatte nach einem der Ansprüche 1 bis 5, **dadurch gekennzeichnet, dass** die Oberflächengravur ein Streifen― oder Kreismuster umfasst.

7. Glasplatte nach einem der Ansprüche 1 bis 6, **dadurch gekennzeichnet, dass** der Wellenlängenkonversionsleuchtstoff Cer dotiertes Yttrium-Aluminium-Granat, Lutetium-Aluminium-Granat und/oder Europium dotiertes Strontium-Barium-Nitridsilikat umfasst.

## Claims

1. Glass plate (1), in particular single-pane safety glass, one edge section (1c) of which is suitable for applying at least one light source (2) emitting light in a first wavelength range (λ₁ +/- Δλ₁) such that the light emitted from it is radiated into the interior of the glass plate (1) essentially in the direction of an edge section (1d) of the glass plate (1) opposite the one edge section (1c), and, along the radiation direction of the light source (2), having a wavelength conversion luminescent material that at least partially converts radiated light of the first wavelength range (λ₁ +/- Δλ₁) to light of a second wavelength range (λ₂ +/- Δ λ₂) and emits this light of a second wavelength range (λ₂ +/Δ λ₂), wherein the wavelength conversion luminescent material is provided in the area of a surface engraving (4) that is applied along an outer side (1a) of the glass plate (1) delimited by the edge sections (1c, Id), **characterised in that**
the wavelength conversion luminescent material in the area of the surface engraving (4) is burnt into the glass plate (1) with pulverised glass.

2. Glass plate according to claim 1, **characterised in that** a mixture of the wavelength conversion luminescent material, glass powder and a hot-melt lacquer or a solvent is applied to the glass plate (1) by means of a digital or screen printing method.

3. Glass plate according to claim 1 or 2, **characterised in that** the surface engraving (4) is created by an irradiation of the glass plate (1) by means of a laser.

4. Glass plate according to any one of claims 1 to 3, **characterised in that** the surface engraving has structural elements (4) whose distance from each other declines as the distance from the edge section (1c) increases.

5. Glass plate according to claim 4, **characterised in that** the structural elements (4) are formed by funnel- or bowl-shaped recesses.

6. Glass plate according to any one of claims 1 to 5, **characterised in that** the surface engraving comprises a stripe or circle pattern.

7. Glass plate according to any one of claims 1 bis 6, **characterised in that** the wavelength conversion luminescent material is cerium-doped yttrium-aluminium garnet, lutetium-aluminium garnet and/or europium-doped strontium barium nitride silicate.

## Revendications

1. Plaque de verre (1), en particulier verre de sécurité trempé, dont une section de bord (1c) est adaptée à la fixation d'au moins une source lumineuse (2) émettant de la lumière dans un premier intervalle de longueur d'onde (λ₁ +/- Δ λ₁), de telle manière que la lumière qu'elle émet soit irradiée à l'intérieur de la plaque de verre (1), pour l'essentiel en direction d'une section de bord (1d) de la plaque de verre (1) opposée à la section de bord (1c), et dotée d'une substance fluorescente de conversion de longueur d'onde prévue le long de la direction d'irradiation de la source lumineuse (2) qui transforme, au moins en partie, la lumière irradiée du premier intervalle de longueur d'onde (λ₁ +/- Δ λ₁) en lumière d'un deuxième intervalle de longueur d'onde (λ₂ +/- Δ λ₂) et l'émet, la substance fluorescente de conversion de longueur d'onde étant prévue dans la zone d'une gravure de surface (4) qui est appliquée le long d'une face extérieure (1a) de la plaque de verre (1) limitée par les sections de bord (1c, 1d), **caractérisée en ce que**
la substance fluorescente de conversion de longueur d'onde est cuite dans la zone de la gravure de surface (4) de la plaque de verre (1) avec du verre pulvérisé.

2. Plaque de verre selon la revendication 1, **caractérisée en ce qu'**un mélange de la substance fluorescente de conversion de longueur d'onde, d'un verre pulvérisé et d'une peinture vitrifiable ou d'un solvant est appliqué sur la plaque de verre (1) à l'aide d'un procédé d'impression numérique ou de sérigraphie.

3. Plaque de verre selon la revendication 1 ou 2, **caractérisée en ce que** la gravure de surface (4) est réalisée par irradiation de la plaque de verre (1) avec un laser.

4. Plaque de verre selon l'une quelconque des revendications 1 à 3, **caractérisée en ce que** la gravure de surface présente des éléments de structure (4) dont l'espacement les uns par rapport aux autres diminue à mesure que la distance par rapport à la section de bord (1c) augmente.

5. Plaque de verre selon la revendication 4, **caractérisée en ce que** les éléments de structure (4) sont formés par des cavités en forme d'entonnoir ou de chaudron.

6. Plaque de verre selon l'une quelconque des revendications 1 à 5, **caractérisée en ce que** la gravure de surface comprend un motif à rayures ou à cercles.

7. Plaque de verre selon l'une quelconque des revendications 1 à 6, **caractérisée en ce que** la substance fluorescente de conversion de longueur d'onde comprend du grenat d'yttrium et d'aluminium dopé au cérium, du grenat d'aluminium lutétium et/ou du nitrure de silicium de strontium et de baryum dopé à l'Europium.
